# EUROPEAN PATENT APPLICATION

(11) **EP 3 979 518 A1**
(43) Date of publication of application: **06.04.2022**
(21) Application number: 20831703.2
(22) Date of filing: 13.04.2020
(51) Int. Cl.: H04B 7/155

(54) **FILTER ANTENNA AND BASE STATION DEVICE**

(30) Priority: 28.06.2019 CN 201910579396
(71) Applicant: ZTE Corporation, Shenzhen, Guangdong 518057 (CN)
(72) Inventor: SUN, Lei, Shenzhen, Guangdong 518057 (CN); KANG, Yulong, Shenzhen, Guangdong 518057 (CN); LIU, Liang, Shenzhen, Guangdong 518057 (CN); REN, Min, Shenzhen, Guangdong 518057 (CN)
(74) Representative: WBH Wachenhausen Patentanwälte PartG mbB
(86) International application number: PCT/CN2020/084471
(87) International publication number: WO 2020/259001

(57) **Abstract**

Provided in the embodiments of the present invention are a filter antenna and base station device. The filter antenna comprises an antenna array subassembly and a filter, wherein an input end of the filter is connected to a signal transceiving circuit by means of a radio frequency connector, the input end of the filter is connected to the signal transceiving circuit by means of the radio frequency connector, and an output end of the filter is connected to a power dividing circuit in the antenna array subassembly, and a signal calibration circuit is arranged in the signal transceiving circuit, such that the filter antenna does not contain the signal calibration circuit.

## Description

### CROSS-REFERENCE TO RELATED APPLICATION

This application is filed based on and claims priority of Chinese patent application No. 201910579396.2 filed on June 28, 2019, the contents of which are incorporated herein by reference in its entirety.

### TECHNICAL FIELD

Embodiments of the present invention relate to, but not limited to, the field of wireless communication technologies, and in particular to, but not limited to, a filtering antenna.

### BACKGROUND

With the rapid development of wireless communication technologies and the evolution of the 4th Generation Mobile Communication Technology (4G) to the 5th Generation Mobile Communication Technology (5G), large-scale array antennas are widely used. A traditional large-scale array antenna adopts a complex architecture, in which an antenna integrated calibration network is connected to an output port of a filter through a radio-frequency connector, and an input port of the filter is connected to a transmitting and receiving circuit module of a base station device through the radio-frequency connector. A conventional scheme is assembled with components such as an antenna array element + a PCB feed network + a metal reflector + a calibration network + a filter + a radio-frequency connector, which has the disadvantage of a large number of components and complex assembly. Multi-layer PCB machining is difficult and costly. Radio-frequency connectors are required for both input and output of filters (for example, a 32-channel large-scale array antenna requires at least 2×32+1 radio-frequency connectors).

With the increasing shortage of site resources, a 5G-scale array antenna and a base station device are fused into an Active Antenna Unit (AAU), which puts forward higher requirements on miniaturization and lightweight of antennas.

### SUMMARY

In view of the problem that the 5G large-scale array antenna has many components and complex assembly, the embodiments of the present invention provide a filtering antenna.

In view of the above, the embodiments of the present invention provide a filtering antenna, including an antenna element assembly and a filter, the antenna element assembly including an antenna element and a power dividing circuit connected to the antenna element, an input terminal of the filter being connected to a signal transmitting and receiving circuit through a radio-frequency connector, an output terminal of the filter being connected to the power dividing circuit, and the signal transmitting and receiving circuit being provided with a signal calibration circuit configured for signal calibration.

The embodiments of the present invention further provide a base station device, including a signal transmitting and receiving circuit and the filtering antenna as described above, the signal transmitting and receiving circuit being connected to the filtering antenna.

The embodiments of the present invention further provide a communication method for a base station device including, calibrating the signal transmitting and receiving circuit through a signal calibration circuit in the signal transmitting and receiving circuit; receiving an uplink signal through the filtering antenna, transmitting the uplink signal to the signal transmitting and receiving circuit for parsing, and transmitting a to-be-transmitted downlink signal, after being processed by the signal transmitting and receiving circuit, externally through the filtering antenna.

Other features and corresponding beneficial effects of the present invention will be set forth in the latter part of the description, and it is to be understood that at least parts of the beneficial effects will become apparent from the disclosure of the present invention.

### BRIEF DESCRIPTION OF DRAWINGS

FIG. 1 is a schematic diagram of a filtering antenna according to the present invention;
FIG. 2 is a schematic structural diagram of a filtering antenna of Embodiment 1 according to the present invention;
FIG. 3 is a schematic diagram of horizontal arrangement of the filtering antenna in Embodiment 1 according to the present invention;
FIG. 4 is a schematic diagram of a 16-channel filtering antenna of Embodiment 2 according to the present invention;
FIG. 5 is a schematic diagram of an antenna element assembly of the 16-channel filtering antenna of Embodiment 2 according to the present invention;
FIG. 6 is a schematic diagram of a filter assembly of the 16-channel filtering antenna of Embodiment 2 according to the present invention;
FIG. 7 is a schematic diagram of a 32-channel filtering antenna of Embodiment 2 according to the present invention;
FIG. 8 is a schematic diagram of a 64-channel filtering antenna of Embodiment 2 according to the present invention;
FIG. 9 is a schematic structural diagram of an integrated filtering antenna of Embodiment 3 according to the present invention;
FIG. 10 is a schematic diagram of a 16-channel integrated filtering antenna of Embodiment 4 according to the present invention;
FIG. 11 is a schematic diagram of a 32-channel integrated filtering antenna of Embodiment 4 according to the present invention; and
FIG. 12 is a schematic diagram of a 64-channel integrated filtering antenna of Embodiment 4 according to the present invention.

### DETAILED DESCRIPTION

In order to make objects, technical solutions and advantages of the present disclosure clearer, the embodiments of the present invention are described in further detail below through specific embodiments in conjunction with the drawings. It is to be understood that preferred embodiments of the present invention are given in the drawings. However, the present invention may be implemented in many different forms and is not limited to the embodiments described herein. The embodiments herein are provided to make the contents disclosed in the present invention more fully understood. Other relevant examples obtained by those having ordinary skill in the art based on the present invention without creative efforts all fall within the protection scope of the patent.

### Embodiment 1

In order to solve the problem that the 5G large-scale array antenna has many components and complex assembly and to realize miniaturization and light weight of large-scale array antennas, the present invention proposes a filtering antenna.

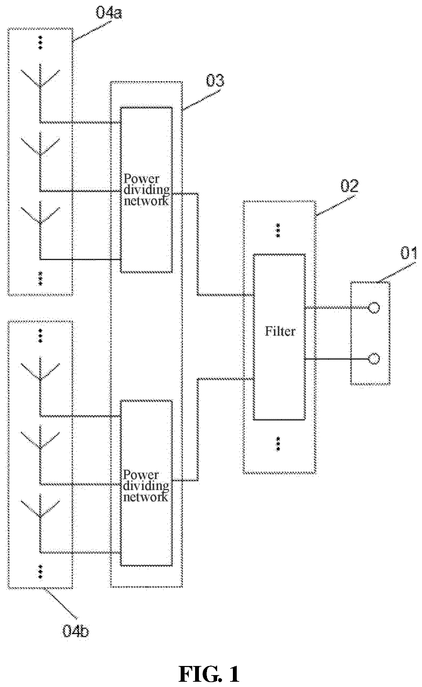

Referring to FIG. 1, FIG. 1 is a schematic diagram showing an operating principle of a filtering antenna. A radio-frequency connector 01 is connected to a transmitting and receiving circuit of a base station device. A signal enters a filter 02 through the radio-frequency connector 01. The signal enters a power dividing network 03 from an output terminal of the filter, and after being subjected to amplitude and phase adjustment by the power dividing network, is finally radiated through an antenna element 04.

Based on the schematic diagram of the operating principle of the filtering antenna, the present invention provides a filtering antenna, including an antenna element assembly and a filter. The antenna element assembly includes an antenna element and a power dividing circuit connected to the antenna element. An input terminal of the filter is connected to a signal transmitting and receiving circuit through a radio-frequency connector. An output terminal of the filter is connected to the power dividing circuit.

It is to be noted that a signal calibration circuit is a component that acquires signal amplitude and consistency of the signal transmitting and receiving circuit, with a calibration purpose of compensating for amplitude and phase differences caused by a connection between the signal transmitting and receiving circuit and the antenna. In order to make a signal sent by each unit of antennas reach a predetermined amplitude and phase, the signal calibration circuit is required to detect the amplitude and phase consistency of the signal in real time to correct an amplitude-phase offset.

In this embodiment, the filtering antenna cooperates with the signal transmitting and receiving circuit in the base station device. The signal calibration circuit is disposed in the signal transmitting and receiving circuit to play a role of calibrating a signal sent by an antenna unit. In this way, the filtering antenna does not include the signal calibration circuit, which simplifies the assembly, minimizes the cost, and realizes miniaturization and light weight of the antenna at the same time.

It is to be noted that the signal transmitting and receiving circuit is provided with a structure having a low-pass filtering function, which enables a low-frequency signal to pass normally, while a high-frequency signal exceeding a predetermined threshold is blocked and weakened.

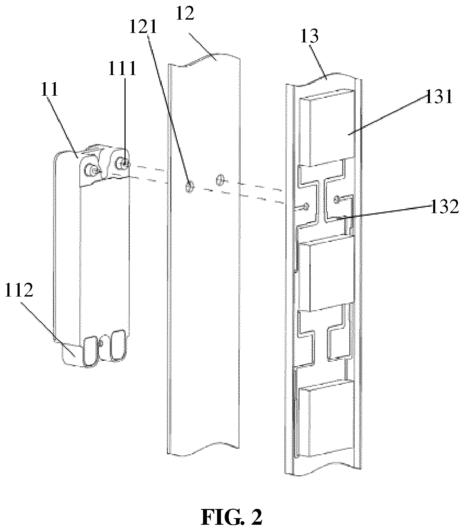

In an embodiment, as shown in FIG. 2, the filtering antenna includes an antenna element assembly 13, an antenna reflector 12 and a filter 11. The antenna element assembly 13 includes antenna elements 131 and a power dividing circuit 132 connected to the antenna elements 131.

In this embodiment, the power dividing circuit 132 and the filter 11 are each provided with a structure having a low-pass filtering function, which enables a low-frequency signal to pass normally, while a high-frequency signal exceeding a predetermined threshold is blocked and weakened.

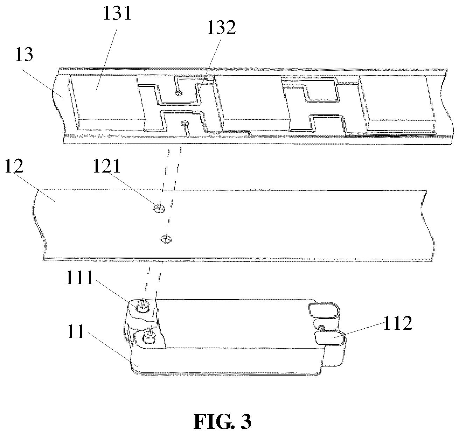

It is to be noted that the components of the filtering antenna may be arranged horizontally as shown in FIG. 3 or arranged vertically as shown in FIG. 2. Through different arrangements of the components of the filtering antenna, a 16-channel, 32-channel, 64-channel ... and 16×N-channel filtering antenna (N is an integer greater than or equal to 1) may be formed.

The antenna reflector 12 includes, but not limited to, a metal reflector, a plastic board having a metal coating, and plays a role of orienting and supporting an antenna reflection surface. In this embodiment, the antenna element assembly 13 and the filter 11 are disposed on two opposite surfaces of the antenna reflector 12, and the surface of the antenna reflector 12 provided with the antenna element assembly 13 is referred to as front surface.

The antenna elements 131 are configured for radiating energy outward from the antenna. The antenna elements 131 are disposed on the front surface of the antenna reflector 12. In an embodiment, the antenna elements may be fixed on the front surface of the antenna reflector 12 by screwing, clamping or the like, and a plurality of antenna elements 131 may be arranged in an array on the front surface of the antenna reflector 12. The power dividing circuit 132 plays a role of adjusting amplitude and phase for a signal. The power dividing circuit 132 is connected to the antenna elements 131 and is also disposed on the front surface of the antenna reflector 12. It is to be understood that the antenna element assembly 13 may include a plurality of antenna elements 131 and the power dividing circuit 132.

In this embodiment, the antenna elements 131 and the power dividing circuit 132 connected to the antenna elements 131 may be integrated on a carrier, such as a PCB or a plastic board. The carrier may have a shape matching with the shape of the antenna reflector 12.

The filter 11 is disposed and fixed on a back surface of the antenna reflector 12 by screwing, clamping or the like. An output terminal of the filter 11 is connected to the power dividing circuit 132. An input terminal of the filter 11 is connected to the signal transmitting and receiving circuit through the radio-frequency connector. It is to be noted that the filter in this embodiment is a dual-channel filter.

In this embodiment, the antenna reflector 12 is further provided with a connection through hole 121, through which the output terminal of the filter 11 is connected to the power dividing circuit 132.

It is to be understood that the output terminal of the filter 11 may be connected to the power dividing circuit 132 in various manners. In this embodiment, one of the various manners is that the output terminal of the filter 11 is connected to the power dividing circuit 132 with a conductive probe 111 passing through the connection through hole 121 of the antenna reflector 12. It is also to be noted that the conductive probe 111 in this embodiment has two functions, one is to serve as the output terminal of the filter 11 and the other is to serve as a component to connect the output terminal of the filter 11 to the power dividing circuit 132 of the antenna element assembly. In this way, it can save half of the number of radio-frequency connectors and make the connection simple.

In the filtering antenna according to the embodiments of the present invention, the architecture of the filtering antenna is simplified, and the antenna element assembly and the filter are connected through the conductive probe, which is simple and facilitates the assembly. At the same time, the signal calibration circuit is disposed in the signal transmitting and receiving circuit instead of the filtering antenna, so that the overall structure of the filtering antenna is simplified, the cost is reduced, and the size of the antenna is reduced to achieve miniaturization.

### Embodiment 2

The above embodiment provides a filtering antenna, including an antenna element assembly and a filter. The antenna element assembly includes antenna elements and a power dividing circuit connected to the antenna elements. An input terminal of the filter is connected to a signal transmitting and receiving circuit through a radio-frequency connector. An output terminal of the filter is connected to the power dividing circuit. Based on the architecture of the filtering antenna proposed in the above embodiment, one antenna element and one dual-channel filter may form a 2-channel filtering antenna assembly. The filtering antenna may include a 16-channel, 32-channel, 64-channel ... and 16×N-channel filtering antenna (N is an integer greater than or equal to 1). The 16-channel, 32-channel and 64-channel filtering antennas are taken as examples below to make detailed descriptions, respectively.

### Example 1

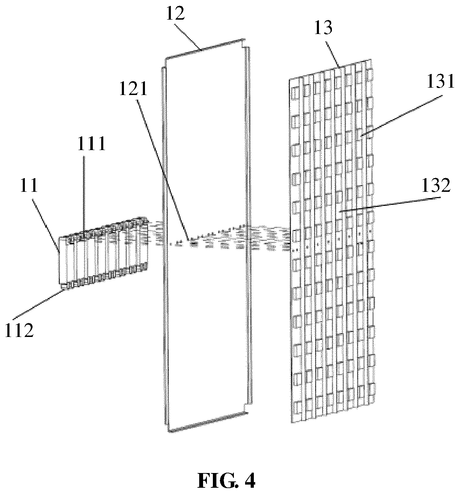

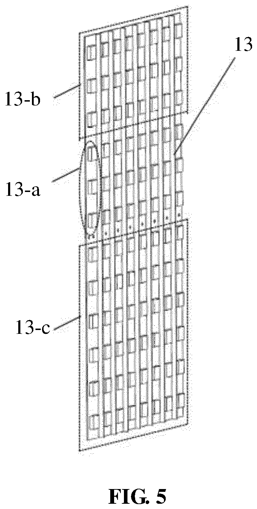

Referring to FIG. 4 to FIG. 6, this embodiment provides a 16-channel filtering antenna. The 16-channel filtering antenna includes an 8×12 antenna element assembly 13 and a 16-channel filter 11. It is to be noted that, in the 8×12 antenna element assembly 13, 8 represents the number of columns of the antenna element assembly, that is, 8 dual-polarized antenna arrays, each of which has two antenna channels. Therefore, the 8 dual-polarized antenna arrays have 16 antenna channels. The 16-channel filter 11 has 8 filters, each of which has two output ports connected to a dual-polarized antenna array.

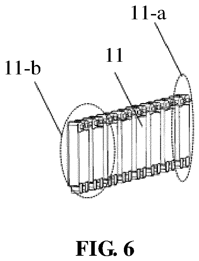

In the 8×12 antenna element assembly 13, 8 represents the number of columns of the antenna element assembly, and 12 represents the number of rows of the antenna element assembly. In this embodiment, a large 8×12 assembly may be designed, or an 8×12 array may be formed using small assemblies. Referring to FIG. 6, the numeral 13-a refers to a 1×3 antenna element assembly, and an 8×12 antenna array may be formed using thirty-two 1×3 antenna element assemblies 13-a. And the numeral 13-b refers to an 8×3 antenna element assembly, and an 8×12 antenna array may be formed using four 8×3 antenna element assemblies 13-b. And the numeral 13-c refers to an 8×6 antenna element assembly, and an 8×12 antenna array may be formed using two 8×6 antenna element assemblies 13-c. It is to be noted that the antenna element assembly may be flexibly formed according to actual situations, and is not limited to the above forms.

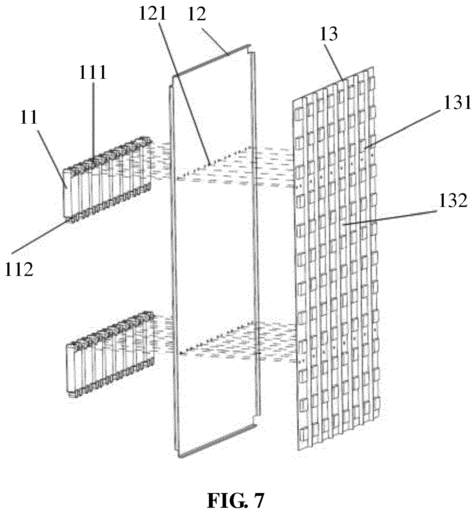

Similarly, the filter also has a variety of choices. Referring to FIG. 7, the numeral 11 refers to a 16-channel filter, which has eight dual-channel filters. Specifically, a filter may be designed integrally as a whole 16-channel filter, or as in a combined form with 2-channel filter, 4-channel filter and 6-channel filter. For example, the numeral 11-a refers to a 2-channel filter, and a 16-channel filter may be formed using eight 2-channel filters 11-a. And the numeral 11-b refers to a 4-channel filter, and a 16-channel filter may be formed using four 4-channel filters 11-b. It is to be noted that the filter may be flexibly formed according to actual situations, and is not limited to the above forms.

In this embodiment, the antenna reflector 12 plays a role of carrying and orienting a reflection surface required by the antenna. It is to be understood that the antenna element assembly 13 and the filter 11 may be fixed to the antenna reflector 12 by, without limitation, screwing, clamping or the like. For example, in the case of screwing, holes required by the antenna element assembly 13 and the filter 11 are machined on the antenna reflector 12, which engage with screws to fix the antenna element assembly 13 and the filter 11.

In this embodiment, the antenna reflector 12 is further provided with a connection through hole 121, through which the output terminal of the filter 11 is connected to the power dividing circuit 132. It is to be noted that the output terminal of the filter 11 may be connected to the power dividing circuit 132 in a variety of manners. In this embodiment, the output terminal of the filter 11 is provided as a conductive probe 111 by which a connection with the power dividing circuit 132 is achieved.

In an embodiment, the output terminal of the filter 11 is provided as a conductive probe 111 which passes through the connection through hole 121 in the antenna reflector 12 at a corresponding position to be connected to the power dividing circuit 132 of the antenna element assembly 13.

It is to be noted that the conductive probe 111 has two functions, one is to serve as the output terminal of the filter 11, and the other is to serve as a component to connect the output terminal of the filter 11 to the power dividing circuit 132 of the antenna element assembly. In this way, it can save half of the number of radio-frequency connectors and make the connection simple.

### Example 2

Referring to FIG. 7, this embodiment provides a 32-channel filtering antenna including an 8×12 antenna element assembly 13 and a 32-channel filter 11.

It is to be noted that, in order to support 32 channels, the 8×12 antenna element assembly is divided into two 8×6 arrays symmetrical up and down, each of which supports 16 channels. The two 8×6 arrays form the 32-channel filtering antenna. The 32-channel filter 11 includes 16 filter units. In order to support 32 channels, 16 filters are divided into two sets of 8 filters symmetrical up and down, each filter supports 2 channels. The two sets of 8 filters form the 32-channel filter.

It is to be understood that the example is different from the above example only in the number of channels of the filtering antenna for signal transmission, with the rest being the same as the above example, which are not described in detail herein.

### Example 3

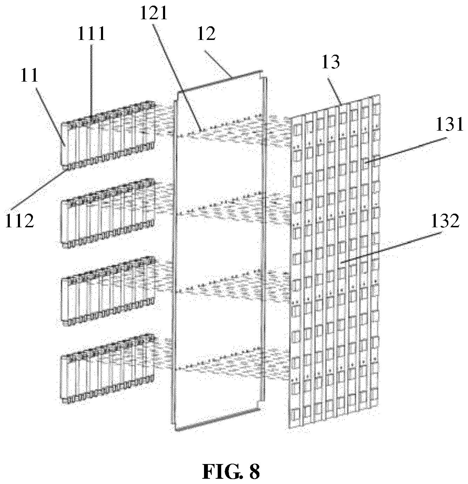

Referring to FIG. 8, this embodiment further provides a 64-channel filtering antenna including an 8×12 antenna element assembly 13 and a 64-channel filter 11.

It is to be noted that, in order to support 64 channels, the 8×12 antenna element assembly 13 is divided into four 8×3 arrays symmetrical up and down, each of which supports 16 channels. The four 8×3 arrays form the 64-channel filtering antenna. The 64-channel filter 11 includes 32 filter units. In order to support 64 channels, 32 filters are divided into four sets of 8 filters symmetrical up and down, each filter supports 2 channels. The four sets of 8 filters form the 64-channel filter.

It is to be understood that the example is different from the above example only in the number of channels of the filtering antenna for signal transmission, with the rest being the same as the above example, which are not described in detail herein.

In the embodiment of the present invention, a multi-channel filtering antenna is provided on the basis of minimum filtering antenna units. The multi-channel filtering antenna is realized by different arrangements and combinations of antenna element assemblies and filters, which has strong extensibility and flexible applications. The antenna element assembly and the filter are connected through the conductive probe, by which the connection is simple and the assembly is easy. At the same time, the signal calibration circuit is disposed in the signal transmitting and receiving circuit instead of the filtering antenna, so that the overall structure of the filtering antenna is simplified, the cost is reduced, and the size of the antenna is reduced to achieve miniaturization.

### Embodiment 3

In order to further realize the requirements on miniaturization and light weight of the large-scale array antenna, on the basis of the above embodiments, this embodiment of the present invention provides an integrated filtering antenna, which integrates various functions of the filtering antenna into a module.

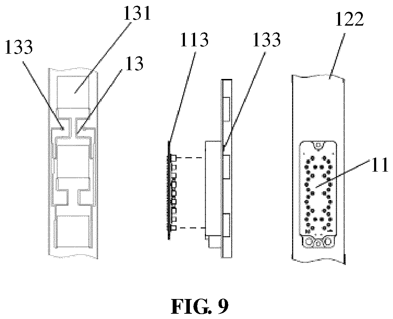

Referring to FIG. 9, the integrated filtering antenna includes an antenna element assembly 13, a reflection layer 122 and a filter 11. The antenna element assembly 13, the reflection layer 122 and the filter 11 are integrated on a carrier.

It is to be noted that the carrier includes, but not limited to, a plastic board, a metal board, a PCB and the like. This embodiment is described in further detail by taking the plastic board as the carrier.

In this embodiment, an injection molding can be used to produce the plastic board, and the various functions of the filtering antenna can be implemented by machining a metal layer on a surface of the plastic board. The metal layer is machined on the surface of the plastic board by, without limitation, electroplating, thermal spraying, ion plating and other machining processes. A radiation surface of the antenna elements 131, the power dividing circuit, the reflection surface and the filter are machined by a plastic electroplating process on the surface of the plastic board. The plastic board is further provided with a connection through hole 133, which leads a direct access into the filter from the power dividing circuit. It is to be noted that the reflection layer 122 machined on the plastic board in this embodiment can realize the function of the antenna reflector 12 in the above embodiments. Therefore, the plastic board in this embodiment can serve as the antenna reflector 12.

It is to be noted that a conductive layer is disposed on an inner wall of the connection through hole 133 to realize the connection between the power dividing circuit and the filter. The conductive layer has the same function as the conductive probe 111 in the above embodiments, i.e., it can serve as the output terminal of the filter 11, or serve as a component to connect the output terminal of the filter 11 to the power dividing circuit 132. The conductive layer may be a metal layer. The metal layer may be machined by a process including, but not limited to, electroplating, thermal spraying, ion plating and the like.

In this embodiment, the filter includes, but not limited to, a band-pass filter, a dielectric filter, a waveguide filter, a coaxial filter, a cavity filter and the like. Detailed descriptions are given below by taking the cavity filter as an example.

The cavity filter includes a cavity body and a cover plate 113 covering a cavity. A tuning nut is provided on the cover plate 113. The body of the cavity filter is machined on a back surface of the antenna by electroplating, and forms a cavity of an integrated structure with the back surface of the reflection layer 122 of the antenna. It is to be noted that the surface of the plastic board on which the power dividing circuit and the antenna element 13 are provided is referred to as the front surface of the antenna, and the filter 11 is disposed on the back surface of the antenna.

In this embodiment, the filtering antenna cooperates with the signal transmitting and receiving circuit in the base station device. The signal calibration circuit is disposed in the signal transmitting and receiving circuit to play a role of calibrating a signal sent by an antenna unit. In this way, the filtering antenna does not include the signal calibration circuit, which simplifies the assembly, minimizes the cost, and realizes miniaturization and light weight of the antenna at the same time.

In the integrated filtering antenna according to the embodiment of the present invention, the antenna element assembly and the filter are integrated on a module and are connected through the conductive probe, which reduces structural complexity and connection complexity and can also greatly improve the degree of integration of the filtering antenna. At the same time, the signal calibration circuit is disposed in the signal transmitting and receiving circuit instead of the filtering antenna, so that the overall structure of the filtering antenna is simplified, the cost is reduced, and an antenna size is reduced to achieve miniaturization.

### Embodiment 4

The above embodiment provides an integrated filtering antenna including an antenna element assembly and a filter, which are integrated on a module. Based on the architecture of the integrated filtering antenna proposed in the above embodiment, a 16-channel, 32-channel, 64-channel ... or 16×N-channel integrated filtering antenna (N is an integer greater than or equal to 1) may be formed by arraying the integrated filtering antenna. The 16-channel, 32-channel and 64-channel integrated filtering antennas are taken as examples below to make detailed descriptions, respectively.

### Example 1

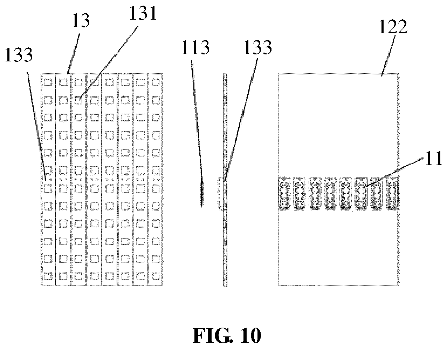

Referring to FIG. 10, this embodiment provides a 16-channel integrated filtering antenna including an 8×12 antenna element assembly 13 and a 16-channel filter 11. It is to be noted that, in the 8×12 antenna element assembly 13, 8 represents the number of columns of the antenna element assembly, that is, 8 dual-polarized antenna arrays, each of which has two antenna channels. Therefore, the 8 dual-polarized antenna arrays have 16 antenna channels. In this embodiment, each filter is a dual-channel filter, and the 16-channel filter 11 has 8 filters, each of which has two output ports connected to a dual-polarized antenna array.

In this embodiment, the antenna element assembly 13, the filter 11 and the reflection layer 122 are machined and integrated on a carrier. It is to be noted that the carrier includes, but not limited to, a plastic board, a metal board, a PCB and the like. This embodiment is described in further detail by taking the plastic board as the carrier.

In this embodiment, an injection molding can be used to produce the plastic board and the various functions of the filtering antenna can be implemented by machining a metal layer on a surface of the plastic board. The metal layer is machined on the surface of the plastic board by, without limitation, electroplating, thermal spraying, ion plating and other machining processes. A radiation surface of the 8×12 antenna elements 131, the power dividing circuit, the reflection surface 122 and the 8 filters 11 are machined by plastic electroplating on the surface of the plastic board. The plastic board is further provided with a connection through hole 133, which leads a direct access into the filter from the power dividing circuit. The radiation surface of the antenna element is provided on the surface of the plastic board, and the power dividing circuit is disposed on the same plane as the radiation surface of the antenna element and is connected to the antenna element. In this embodiment, the surface of the plastic board on which the radiation surface of the antenna element and the power dividing circuit are provided is referred to as the front surface of the antenna, and the filter 11 is disposed on the back surface of the antenna. It is to be noted that the reflection layer 122 machined on the plastic board in this embodiment can realize the function of the antenna reflector 12 in the above embodiments.

In this embodiment, a conductive layer is disposed on an inner wall of the connection through hole 133 to realize the connection between the power dividing circuit and the filter. The conductive layer has the same function as the conductive probe in the above embodiment, i.e., it can serve as the output terminal of the filter 11, or serve as a component to connect the output terminal of the filter 11 to the power dividing circuit 132. The conductive layer may be a metal layer. The metal layer may be machined by a process including, but not limited to, electroplating, thermal spraying, ion plating and the like.

In this embodiment, the filtering antenna cooperates with the signal transmitting and receiving circuit in the base station device. The signal calibration circuit is disposed in the signal transmitting and receiving circuit to play a role of calibrating a signal sent by an antenna unit. In this way, the filtering antenna does not include the signal calibration circuit, which simplifies the assembly, minimizes the cost, and realizes miniaturization and light weight of the antenna at the same time.

### Example 2

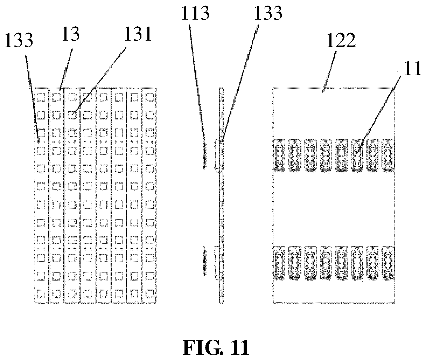

Referring to FIG. 11, this embodiment provides a 32-channel integrated filtering antenna including an 8×12 antenna element assembly 13 and a 32-channel filter 11.

It is to be noted that, in order to support 32 channels, the 8×12 antenna element assembly 13 is divided into two 8×6 arrays symmetrical up and down, each of which supports 16 channels. The two 8×6 arrays form the 32-channel filtering antenna. The 32-channel filter 11 includes 16 filter units. In order to support 32 channels, 16 filters are divided into two sets of 8 filters symmetrical up and down, each filter supports 2 channels. The two sets of 8 filters form the 32-channel filter.

It is to be understood that the example is different from the above example only in the number of channels of the filtering antenna for signal transmission, with the rest being the same as the above example, which are not described in detail herein.

### Example 3

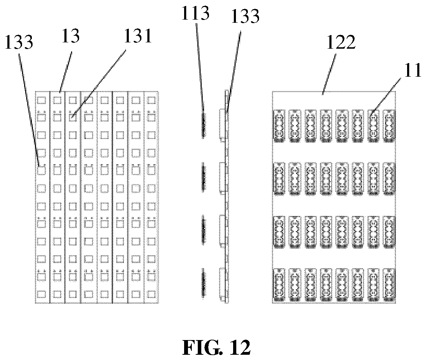

Referring to FIG. 12, this embodiment further provides a 64-channel integrated filtering antenna including an 8×12 antenna element assembly 13 and a 64-channel filter 11.

It is to be noted that, in order to support 64 channels, the 8×12 antenna element assembly 13 is divided into four 8×3 arrays symmetrical up and down, each of which supports 16 channels. The four 8×3 arrays form the 64-channel filtering antenna. The 64-channel filter 11 includes 32 filter units. In order to support 64 channels, 32 filters are divided into four sets of 8 filters symmetrical up and down, each filter supports 2 channels. The four sets of 8 filters form the 64-channel filter.

It is to be understood that the example is different from the above example only in the number of channels of the filtering antenna for signal transmission, with the rest being the same as the above example, which are not described in detail herein.

In the embodiment of the present invention, a multi-channel integrated filtering antenna is provided on the basis of minimum integrated filtering antenna units. The multi-channel filtering antenna is realized by integrating antenna element assemblies and filters on a module in different arrangements and combinations, which has strong extensibility and flexible applications. The antenna element assembly and the filter are connected through the conductive layer, which reduces structural complexity and connection complexity. Modular design can also greatly improve the degree of integration of the filtering antenna. At the same time, the signal calibration circuit is disposed in the signal transmitting and receiving circuit instead of the filtering antenna, so that the overall structure of the filtering antenna is simplified, the cost is reduced, and an antenna size is reduced to achieve miniaturization.

### Embodiment 5

The embodiment of the present invention proposes a communication method for a base station device according to the filtering antenna in the above embodiment. The base station device includes a signal transmitting and receiving circuit and the filtering antenna according to the above embodiment. The communication method for a base station device includes the following steps.

At step 1, the signal transmitting and receiving circuit is calibrated through a signal calibration circuit in the signal transmitting and receiving circuit.

An antenna has to be calibrated before operation. After calibration, the antenna can operate.

It is to be noted that, the antenna achieves a purpose of increasing transmitting power and receiving gain by stacking coherent signals in space. In order to achieve the purpose, amplitude and phase differences caused by the connection between the signal transmitting and receiving circuit and the antenna have to be controlled. Therefore, acquired signals are calibrated by the signal calibration circuit, to allow the signals sent by each unit of antennas to reach a predetermined amplitude and phase. At the same time, the signal calibration circuit is required to detect amplitude and phase consistency of the signal in real time to correct an amplitude-phase offset. In this embodiment, the way of calibrating the antenna can be flexibly selected, which is not limited herein.

In this embodiment, the signal calibration circuit disposed in the signal transmitting and receiving circuit does not affect the calibration of a signal from the filtering antenna. The filtering antenna does not include the signal calibration circuit, which simplifies the assembly, minimizes the cost, and realizes miniaturization and light weight of the antenna at the same time.

At step 2, an uplink signal is received through the filtering antenna and is transmitted to the signal transmitting and receiving circuit for parsing, and a to-be-transmitted downlink signal, after being processed by the signal transmitting and receiving circuit, is transmitted externally through the filtering antenna.

After completion of the calibration of the antenna, the antenna can operate. Once the antenna operates, the calibration circuit stops its calibration function.

In this embodiment, after a communication channel is calibrated by the calibration circuit, the filtering antenna can receive and transmit signals. The input terminal of the filter 11 is connected to the signal transmitting and receiving circuit through a radio-frequency connector. The output terminal of the filter 11 is connected to the power dividing circuit 132. The power dividing circuit 132 is connected to the antenna elements 131. Specifically, a downlink signal transmitted by a transmitting terminal of the signal transmitting and receiving circuit enters the filter 11 through the radio-frequency connector, then enters the power dividing circuit 132 from the output terminal of the filter 11 after clutter filtering by the filter 11, and is radiated to the space from the antenna elements 131. At the same time, the filtering antenna may also receive an uplink signal and transmit the uplink signal to the signal transmitting and receiving circuit for parsing.

In the communication method for a base station device according to the embodiment of the present invention, the signal transmitting and receiving circuit is calibrated through the signal calibration circuit in the signal transmitting and receiving circuit, after the calibration, an uplink signal is received by the filtering antenna and transmitted to the signal transmitting and receiving circuit for parsing, and a to-be-transmitted downlink signal, after being processed by the signal transmitting and receiving circuit, is transmitted externally through the filtering antenna. According to this method, the signal calibration circuit is disposed in the signal transmitting and receiving circuit instead of the filtering antenna, so that the overall structure of the filtering antenna is simplified, the cost is reduced, and an antenna size is reduced to achieve miniaturization.

The present invention has the following beneficial effects.

In the filtering antenna and the base station device according to the embodiments of the present invention, the antenna element assembly and the filter are modularized, and at the same time, the signal calibration circuit is disposed in the signal transmitting and receiving circuit instead of the filtering antenna, which simplifies the assembly of the filtering antenna, minimizes the cost, and realizes miniaturization and light weight of the antenna at the same time.

Although the embodiments of the present invention are described in further detail above with reference to specific embodiments, the specific implementation of the present invention should not be construed as being limited to the descriptions. Those having ordinary skill in the art can make several simple modifications or replacements without departing from the concept of the present invention, all of which should be construed as falling within the protection scope of the present invention.

## Claims

1. A filtering antenna, comprising an antenna element assembly (13) and a filter (11), the antenna element assembly (13) comprising an antenna element (131) and a power dividing circuit (132) connected to the antenna element (131), an input terminal of the filter (11) being connected to a signal transmitting and receiving circuit through a radio-frequency connector, an output terminal of the filter (11) being connected to the power dividing circuit (132), and the signal transmitting and receiving circuit being provided with a signal calibration circuit configured for signal calibration.

2. The filtering antenna according to claim 1, further comprising an antenna reflector (12) configured for carrying the antenna element assembly (13) and the filter (11), the antenna reflector (12) being configured for orienting antenna reflection, and the antenna element assembly (13) and the filter (11) being disposed on two opposite surfaces of the antenna reflector (12).

3. The filtering antenna according to claim 2, wherein the antenna reflector (12) is provided with a connection through hole (121), and the output terminal of the filter (11) is connected to the power dividing circuit (132) through the connection through hole (121).

4. The filtering antenna according to claim 3, wherein the output terminal of the filter (11) is of a conductive structure.

5. The filtering antenna according to claim 4, wherein the conductive structure is a conductive probe (111) which passes through the connection through hole (121) in the antenna reflector (12) to be connected with the power dividing circuit (132).

6. The filtering antenna according to claim 4, wherein the conductive structure is a conductive layer disposed on an inner wall of a connection through hole (133), and the filter (11) is connected to the power dividing circuit (132) through the conductive layer.

7. The filtering antenna according to claim 1, wherein the power dividing circuit (132) is provided with a structure having a low-pass filtering function.

8. The filtering antenna according to claim 1, wherein the filter (11) and the signal transmitting and receiving circuit are respectively provided with a structure having a low-pass filtering function.

9. A base station device, comprising a signal transmitting and receiving circuit and the filtering antenna according to any one of claims 1-8, the signal transmitting and receiving circuit being connected to the filtering antenna.

10. A communication method for the base station device according to claim 9, comprising:
calibrating the signal transmitting and receiving circuit through a signal calibration circuit in the signal transmitting and receiving circuit; and
receiving an uplink signal through the filtering antenna and transmitting the uplink signal to the signal transmitting and receiving circuit for parsing, and
transmitting a to-be-transmitted downlink signal, after being processed by the signal transmitting and receiving circuit, externally through the filtering antenna.
